# FASCICULE DE BREVET EUROPEEN

(11) **EP 1 127 654 B1**
(45) Date de publication et mention de la délivrance du brevet: **16.11.2005**
(21) Numéro de dépôt: 01400436.0
(22) Date de dépôt: 19.02.2001
(51) Int. Cl.: B23K 37/04, B23K 26/08

(54) **Machine à rabouter des bandes métalliques et son procédé de mise en oeuvre**
Verfahren und Vorrichtung zum Stumpfschweissen von metallischen Blechen
Metal sheet butt welding method and apparatus

(30) Priorité: 21.02.2000 FR 0002120
(43) Date de publication de la demande: 29.08.2001
(73) Titulaire: VAI CLECIM, 92000 Nanterre Cédex (FR)
(72) Inventeur: Zennaf, Brahim, 42400 Saint Etienne (FR); Savaete, François, 69510 Soucieu en Jarrest (FR)
(74) Mandataire: Michelet, Alain

(56) Documents cités:
- EP-A- 0 438 615
- EP-A- 0 807 487
- DE-C- 4 100 302
- DE-U- 6 941 193
- LU-A- 58 010

## Description

L'invention se réfère à une machine à rabouter deux bandes métalliques défilant l'une après l'autre telle que décrite dans le préambule de la revendication indépendante 1 et un procédé de mise en oeuvre d'une telle machine comme décrit dans le préambule de la revendication indépendante 9.

Dans les installations métallurgiques, en particulier de production de bandes métalliques, on est souvent amené à relier par soudure électrique les extrémités de deux bandes successives. Par exemple, dans des installations de traitement de bandes, celles-ci sont généralement enroulées en bobine pour passer d'une opération à la suivante. Pour réaliser un travail en continu, par exemple dans les lignes de finition, on doit donc souder l'extrémité aval, dans le sens de défilement, d'une bande en fin de traitement à l'extrémité amont de la bande suivante. On est ainsi amené à réaliser une soudure suivant une ligne transversale, généralement perpendiculaire à l'axe de défilement.

Différents moyens sont utilisés à cet effet. On peut, par exemple, appliquer les extrémités de deux bandes l'une sur l'autre, mais il est souvent nécessaire que les deux bandes soient soudées bout à bout, sans surépaisseur. Dans le procédé de soudage bout à bout, on cisaille tout d'abord les deux extrémités, respectivement aval et amont, des deux bandes, le long de deux lignes parallèles, et l'on rapproche ensuite les bandes l'une de l'autre pour mettre en contact les bords en vis à vis qui sont chauffés à une température permettant le soudage.

Une telle installation comprend donc, d'une façon générale, des moyens de cisaillage de deux bords parallèles, des moyens d'application l'un vers l'autre des deux bords cisaillés et des moyens de chauffage des extrémités des deux bords en contact, à une température permettant à la soudure.

Pour le cisaillage et la soudure, les deux extrémités, respectivement aval et amont des deux bandes sont, généralement, maintenues par des organes de maintien montés sur deux bâtis, respectivement fixe et mobile, chaque organe de maintien comprenant deux mâchoires équipées de mors de serrage placés, respectivement, de part et d'autre d'un plan de défilement des bandes, au moins l'une des mâchoires étant déplaçable verticalement entre une position écartée des mors permettant le défilement des bandes et une position resserrée de maintien de la bande. Le document DE 41 00 302 C décrit l'état de la technique le plus proche.

Dans une disposition connue décrite, par exemple, dans le document EP-A-0.135.133, les outillages utilisés, respectivement, pour le cisaillage des bords et pour la soudure sont placés l'un après l'autre le long de la direction longitudinale de défilement des bandes.

Une telle disposition augmente la longueur de la machine et nécessite le déplacement des deux bandes d'une zone de cisaillage à une zone de chauffage. De plus, des désalignements sont possibles lors de ce transfert.

On a donc proposé de réaliser le cisaillage et le soudage au même endroit, les deux bandes restant serrées entre les mors. Dans une disposition souvent utilisée, les deux organes de maintien sont reliés, respectivement, à deux pôles d'une source de courant électrique, et le chauffage est réalisé par formation de courts-circuits entre les deux bords en vis à vis des deux bandes placées à des potentiels différents. C'est le mode de soudure dit par étincelage.

Il est préférable, en outre, d'appliquer l'une sur l'autre, sous une certaine pression, les extrémités des deux bandes pour réaliser un effet de forgeage pendant la soudure. Dans une installation de ce type décrite, par exemple, dans le document EP-A-0.168.837, les deux organes de maintien reliés à une source de courant électrique sont donc montés sur deux bâtis de maintien, respectivement, un bâti fixe et un bâti mobile déplaçables longitudinalement l'un par rapport à l'autre.

De telles installations sont, maintenant, utilisées couramment et ont fait l'objet de divers perfectionnements.

Par exemple, dans la disposition décrite dans le document FR-A-2.756.504, toutes les opérations peuvent être réalisées dans une même position de travail entre les deux organes de maintien des extrémités des deux bandes. En effet, les divers outillages nécessaires à la soudure tels qu'une cisaille et une raboteuse sont placés sur un chariot porte-outils déplaçable longitudinalement à côté des deux bâtis de la machine, et associé à des moyens de coulissement permettant d'amener les outillages l'un après l'autre dans la position de travail commune.

Cependant, le procédé d'étincelage n'est pas applicable à tous les métaux. En particulier, pour certains aciers spéciaux, il peut se produire une oxydation des éléments d'addition qui entraîne une fragilisation de la soudure. De plus, l'élévation de température nécessaire peut provoquer un durcissement excessif de la partie soudée.

On a été ainsi amené à développer d'autres modes de soudure. En particulier, il est parfois avantageux d'utiliser une torche à laser émettant un faisceau extrêmement mince, ce qui permet de réduire la zone affectée par le soudage.

En pratique, cependant, le soudage classique par étincelage reste préférable pour les métaux produits habituellement, le soudage par laser étant réservé à des produits particuliers.

Or, de tels produits représentent des tonnages qui, souvent, ne justifient pas la réalisation d'une installation spécifique.

Il est donc intéressant de disposer, dans une même installation, de moyens permettant, selon les besoins, d'effectuer le soudage, soit par étincelage, soit par laser, soit même, par un autre procédé.

Cependant, les installations modernes sont soumises à des exigences contradictoires. D'une part, il leur est demandé de satisfaire les besoins très variés de la clientèle qui, souvent, ne peuvent être prévus suffisamment à l'avance. D'autre part, pour des raisons de rentabilité, les bandes défilent à une grande vitesse et il faut donc éviter ou, du moins, réduire au maximum les temps d'arrêt qui entraînent une perte de production coûteuse.

D'autre part, on s'est encore avisé d'une autre difficulté venant du fait que les dispositions prévues pour le soudage par étincelage ne répondent pas nécessairement aux exigences du mode de soudure par laser. En particulier, il est nécessaire, dans tous les cas, que les bords à souder soient rectilignes et parallèles mais, dans le soudage par étincelage, on doit laisser une certaine distance de porte-à-faux entre le bord cisaillé et l'extrémité des mors de serrage pour permettre le soudage. Il peut alors en résulter une légère déformation des tôles ne permettant pas d'assurer une rectitude et un parallélisme suffisant des bords pour un soudage par laser utilisant un faisceau de dimensions très réduites.

L'invention a pour objet de résoudre l'ensemble de ces problèmes grâce à de nouvelles dispositions permettant de changer très rapidement le mode de soudage tout en disposant de moyens permettant, dans tous les cas, de réaliser la soudure dans les meilleures conditions.

L'invention s'applique donc, d'une façon générale, à une machine à rabouter des bandes métalliques comprenant deux bâtis de maintien déplaçables longitudinalement l'un par rapport à l'autre, sur lesquels sont montés, respectivement, deux organes de maintien, respectivement, de l'extrémité aval, dans le sens de défilement, d'une première bande et de l'extrémité amont d'une seconde bande, comprenant chacun, de part et d'autre d'un plan de défilement des bandes, deux mâchoires sur lesquelles sont fixés, de façon amovible, deux paires de mors de serrage, respectivement, de l'extrémité de chaque bande, lesdites mâchoires étant déplaçables entre une position écartée de démontage des mors et une position resserrée, et des moyens de soudage de deux bords parallèles ménagés respectivement sur lesdites extrémités, respectivement aval et amont, des deux bandes, après rapprochement desdits bords par déplacement longitudinal l'un vers l'autre desdits organes de maintien, lesdits moyens de soudage fonctionnant respectivement selon au moins deux modes de soudure différents.

Conformément à l'invention, la machine est équipée d'au moins deux ensembles de mors de serrage adaptés, pour chaque ensemble, respectivement à chaque mode de soudure, lesdits mors de serrage étant montés de façon coulissante sur chaque mâchoire correspondante et associés à des moyens de transfert, respectivement d'un premier ensemble de mors depuis une position de travail centrée sur l'axe de défilement vers une position d'attente écartée latéralement et d'un second ensemble, depuis une position d'attente vers la position de travail.

L'invention couvre également un procédé de raboutage dans lequel il est possible de réaliser le soudage de deux bandes successives selon l'un ou l'autre d'au moins deux modes de soudage différents en fonction de la nature et/ou de l'épaisseur des bandes.

A cet effet, on dispose de deux ensembles de mors de serrage adaptés respectivement à chaque mode de soudage et, en cas de changement de mode de soudage, le premier ensemble de mors utilisés précédemment pour le soudage selon un premier mode est enlevé de la machine et remplacé par le second ensemble de mors adapté au second mode de soudage, celui-ci pouvant alors être effectué dans les meilleures conditions.

De façon particulièrement avantageuse, la machine comprend un ensemble central de guidage comprenant, sur chaque bâti, une paire de chemins de guidage ménagés respectivement sur les deux mâchoires de chaque organe de maintien et comprenant chacun au moins une glissière de support coulissant, respectivement de chaque mors de l'organe de maintien correspondant chaque chemin de guidage central s'étendant, transversalement à la direction de défilement, entre deux côtés latéraux du bâti de la machine et celle-ci est associée à au moins un châssis d'attente placé sur au moins un côté de la machine et portant au moins un ensemble latéral de guidage comprenant deux paires de chemins de guidage respectivement des deux mors de chaque organe de maintien comprenant chacun au moins une glissière placée respectivement dans le prolongement de la glissière correspondante de la mâchoire correspondante, au moins dans une position relative du châssis d'attente par rapport aux deux bâtis permettant le transfert, par coulissement sur les glissières alignées, d'un premier ensemble de mors de serrage de leur position de travail vers le châssis d'attente et, inversement, d'un second ensemble de mors de serrage du châssis d'attente vers la position de travail.

Dans un mode de réalisation préférentiel, la machine comprend deux ensembles latéraux de guidage, respectivement, un premier ensemble latéral initialement vide pour la réception d'un premier ensemble de mors de serrage venant de la position de travail par coulissement sur les glissières alignées, respectivement de l'ensemble central de guidage et dudit premier ensemble latéral, et un second ensemble latéral de guidage pour le support en attente d'un second ensemble de mors de serrage et le transfert de ceux-ci dans la position de travail après retrait du premier ensemble de mors et alignement des glissières dudit second ensemble latéral avec celles de l'ensemble central de guidage.

Ainsi, un premier ensemble de mors de serrage est monté, en position de travail, sur l'ensemble central de guidage et un second ensemble de mors de serrage est monté en position d'attente sur les glissières d'un ensemble latéral de guidage ménagé sur un second châssis d'attente, la machine comprenant des moyens de transfert simultané du second ensemble de mors de sa position d'attente vers la position de travail sur l'ensemble central de guidage avec retrait du premier ensemble de mors et transfert de celui-ci de sa position de travail vers une position d'attente sur un ensemble latéral de guidage ménagé sur un premier châssis d'attente, de l'autre côté de la machine.

Habituellement, chaque organe de maintien comprend deux mâchoires sur lesquelles sont montés, respectivement les deux mors de serrage, lesdites mâchoires étant déplaçables l'une par rapport à l'autre perpendiculairement au plan de défilement entre une position de serrage des mors et une position écartée.

Dans une telle disposition, les glissières des deux ensembles latéraux de guidage sont placées à des niveaux correspondant respectivement aux niveaux des glissières de l'ensemble central ménagées respectivement sur les deux mâchoires de chaque organe de maintien, dans la position écartée des mors de serrage, de façon à permettre le remplacement de ces derniers en passant, respectivement, au dessus et en dessous du plan de défilement des bandes.

Grâce à cette disposition, le remplacement des mors peut être effectué dans la position écartée des mâchoires, par coulissement des mors, respectivement au dessus et en dessous de la bande et sans contact avec celle-ci. De la sorte, en cas de changement du mode de soudage entre l'extrémité aval d'une première bande et l'extrémité amont d'une seconde bande, le premier ensemble de mors placé dans la machine et adapté au mode de soudage précédent peut être enlevé de la machine et remplacé par un second ensemble adapté au mode de soudage suivant, pendant la fin du déroulement de la première bande et sans arrêt du défilement de celle-ci.

La machine selon l'invention permet, en particulier, de réaliser le soudage, soit par étincelage, soit par laser. La machine comprend alors deux ensembles de mors de serrage, respectivement un premier ensemble de mors adaptés au soudage par étincelage et comprenant chacun une partie de fixation amovible sur la mâchoire correspondante prolongée, du côté du bord à souder, par une lèvre assez épaisse pour permettre l'application d'une pression de forgeage entre les bords à souder et un second ensemble de mors adaptés au soudage par faisceau laser et comprenant chacun une partie de fixation amovible sur la mâchoire prolongée, du côté du bord à souder par un bec s'étendant jusqu'à proximité immédiate du bord à souder pour maintenir la bande sur toute sa largeur pendant le cisaillage, ledit bec étant assez mince pour permettre le passage d'une torche d'émission d'un faisceau laser.

Mais l'invention sera mieux comprise par la description suivante d'un mode de réalisation particulier, décrit à titre de simple exemple et représenté sur les dessins annexés.
La figure 1 est une vue schématique de dessus de l'ensemble d'une machine selon l'invention.
La figure 2 est une coupe longitudinale suivant la ligne II-II de la figure 1.
Les figures 2a, 2b sont des vues de détail à échelle agrandie, des moyens de fixation et de guidage des mors.
La figure 3 montre le châssis d'attente des mors "laser", en coupe transversale suivant la ligne III-III de la figure 1.
La figure 4 montre le châssis d'attente des mors "étincelage", en coupe transversale suivant la ligne III, III de la figure 1.
La figure 5 montre l'ensemble du chariot porte-outil, en vue de côté suivant la ligne V-V de la figure 1.
La figure 6 montre, en vue de l'arrière, le châssis d'attente des mors "laser".
- La figure 7 représente le châssis d'attente des mors "laser", en coupe transversale suivant la ligne VII-VII de la figure 1.
La figure 8 représente schématiquement, en coupe transversale, le cisaillage des deux bords.
La figure 9 représente schématiquement, en coupe transversale, le passage d'une torche de soudage par laser.

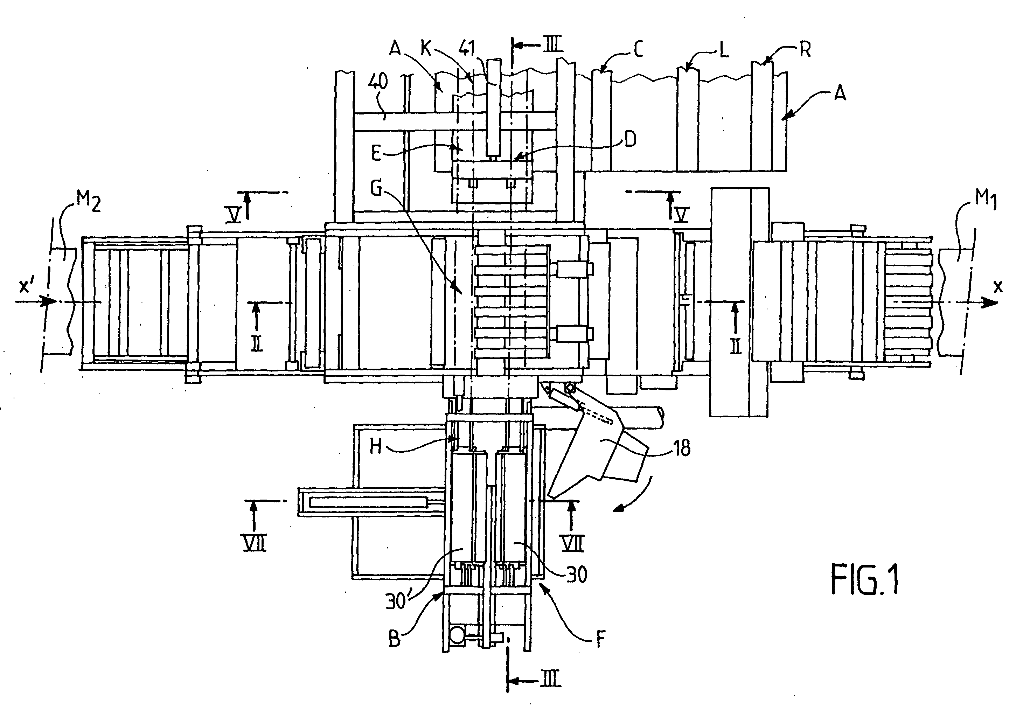

La figure 1 montre schématiquement, en vue de dessus, une machine de soudage S pour le raccordement des extrémités, respectivement aval et amont, de deux bandes métalliques M1, M2 qui défilent successivement, suivant une direction longitudinale x'x, sur un chemin de défilement, par exemple une table à rouleaux T.

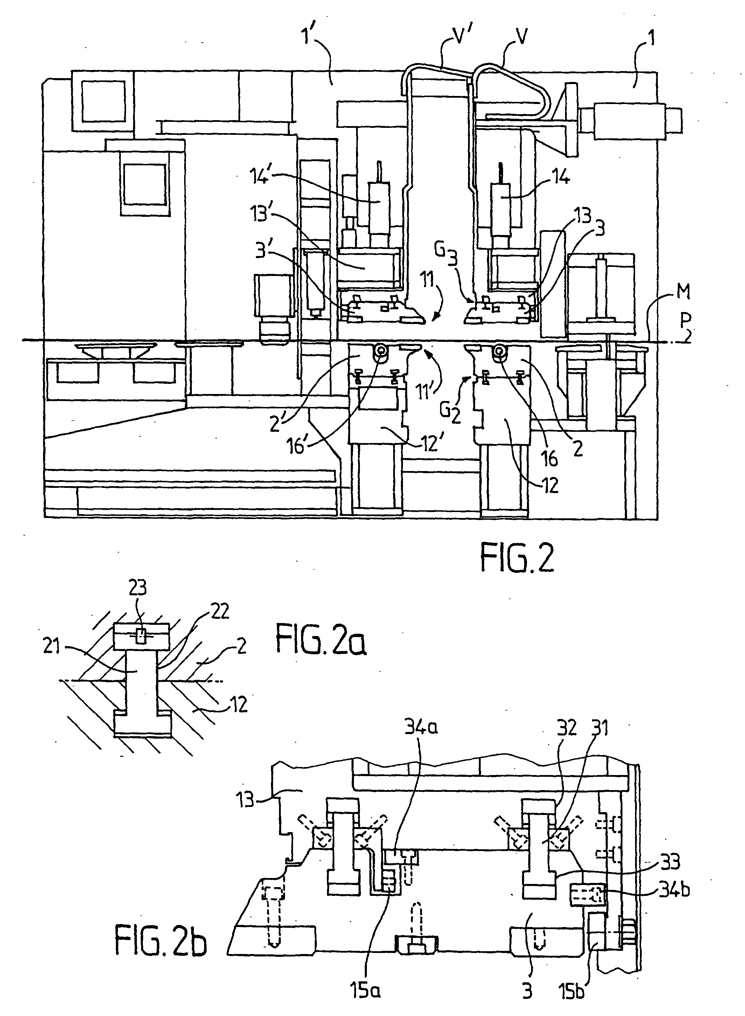

La machine de soudage S, représentée schématiquement, en élévation, sur la figure 2 est du type décrit, par exemple, dans le brevet français N°2.756.504 et comprend deux bâtis de maintien, respectivement un bâti fixe 1 est un bâti mobile 1' sur lesquels sont montés des organes de maintien à deux mors de serrage, respectivement un organe de maintien fixe 11 et un organe de maintien mobile 11'.

De façon classique, le bâti fixe est constitué essentiellement de deux montants écartés l'un de l'autre et reliés par des traverses de façon à former une cage rigide fixée sur le massif de fondation 10 et le bâti mobile 1' est également constitué d'une cage qui est montée coulissante, parallèlement à l'axe longitudinal x'x, entre les deux montants du bâti fixe, le déplacement du bâti mobile étant commandé par des vérins.

L'organe de maintien fixe 11 comprend deux mâchoires, respectivement une mâchoire inférieure 12 et une mâchoire supérieure 13 sur lesquelles sont montés des mors de serrage, respectivement un mors inférieur 2 et un mors supérieur 3.

La mâchoire inférieure 12 forme un socle fixe solidaire des deux montants du bâti 1 et prenant appui sur le massif de fondation 10.

La mâchoire supérieure 13 est montée coulissante verticalement entre les deux montants du bâti 1 et peut être actionnée par au moins un vérin 14, pour assurer le serrage des mors. La remontée à vide et les réglages de niveau de la mâchoire supérieure 13 sont avantageusement effectués par des vérins de manoeuvre à double effet.

L'organe de maintien mobile 11' est réalisé de façon analogue et comprend donc deux mâchoires 12', 13' sur lesquelles sont montés, respectivement, un mors inférieur 2' et un mors supérieur 3', le serrage étant commandé par des vérins 14'.

La bande métallique M se déplace à l'intérieur des deux bâtis 1, 1' le long d'un plan horizontal de défilement P1 et passe entre les mors des deux organes de maintien 11, 11' qui sont représentés en position ouverte sur la figure 2. Les mors inférieurs 2, 2' sont associés à des rouleaux de soutien 16, 16' de la bande qui, cependant, doivent être indépendants des mors, comme on le verra plus loin.

De la sorte, lorsque deux bandes défilent successivement, il est possible de bloquer respectivement l'extrémité aval ou "queue" de 1a première bande M1 entre les mors fixes 2, 3 et l'extrémité amont ou "tête" de la bande suivante M2 entre les mors 2', 3' de l'organe de maintien mobile 11'.

Par ailleurs, comme le montrent schématiquement les figures 1 et 2, les mors des deux organes de maintien, respectivement fixes et mobiles sont reliés respectivement, par des conducteurs V, V' aux deux pôles d'une source de courant électrique.

Les extrémités des deux bandes, ainsi serrées entre les mors des deux organes de maintien 1, 1' sont d'abord cisaillés le long de deux bords rectilignes et parallèles m1, m2. A cet effet, il est avantageux d'utiliser une cisaille double du type décrit en détail dans le brevet français N°2.756.504 déjà cité.

Dans ce procédé connu dit "par étincelage" les bords cisaillés sont mis en contact par déplacement du bâti mobile 1' et les mors de serrage sont mis sous tension. Il se produit alors, le long du joint, des courts-circuits qui provoquent la fusion locale du métal.

Habituellement, on maintient une certaine pression d'application l'un vers l'autre des bords en contact de façon à réaliser un effet de forgeage de la soudure.

Pour permettre le rapprochement des deux tôles, le plan de cisaillement de chaque bord est donc écarté des extrémités des mors d'une certaine distance appelée "porte-à-faux".

Pour maintenir la pression nécessaire au forgeage pendant la soudure, les mors de serrage de chaque organe de maintien 1, 1' doivent avoir une forme assez massive.

Par ailleurs, les mors doivent pouvoir être remplacés et sont donc fixés de façon amovible sur les mâchoires, respectivement 12, 13, 12', 13' de chaque organe de maintien 11, 11'. Par exemple, dans la disposition décrite en détail dans le brevet français N°2.756.504, chaque mors supérieur 3, 3' peut être détaché de la mâchoire correspondante 13, 13' pour venir reposer sur le mors inférieur 2, 2' et l'ensemble peut être démonté par coulissement transversal le long de parties de guidage correspondantes des mâchoires inférieures 12, 12'.

A cet effet, on utilise avantageusement un outillage de remplacement monté dans un châssis d'attente placé à côté de la machine de soudage et comprenant une table placée au niveau des deux mâchoires inférieures et sur laquelle est monté coulissant, transversalement, un chariot d'accrochage muni d'un crochet amovible qui vient s'engager sur les deux paires de mors superposées pour les retirer de la machine et les amener sur la table par coulissement transversal.

Les mors usagés peuvent alors être retirés du châssis d'attente et remplacés par de nouveaux mors qui sont introduits dans la machine par déplacement en sens inverse.

Dans la disposition du brevet français N°2.756.504, la machine de soudage est associée à un chariot porte-outils sur lequel sont placés une cisaille double, un outillage de remplacement et, éventuellement, un outillage de rabotage de la soudure. Par déplacement latéral de ce chariot, ces différents outillages peuvent être amenés successivement dans une position de travail commune centrée sur un plan de travail perpendiculaire à la direction de défilement et le long duquel peuvent coulisser, à tour de rôle, les différents outillages.

Une telle disposition permet, en outre, de placer sur le chariot porte-outils un outillage de soudage par laser, ce qui donne la possibilité de réaliser la soudure, soit par étincelage, soit par laser selon la nature des bandes à souder.

Cependant, comme on l'a indiqué plus haut, les mors de serrage prévus pour le soudage par étincelage ne répondent pas, normalement, aux exigences du mode de soudure par laser.

L'invention permet de remplacer facilement les mors habituels par des mors de serrage spéciaux qui améliorent les conditions de cisaillage sans gêner le passage de la torche laser. De la sorte, on peut réaliser sur les extrémités des deux tôles, des bords en regard rigoureusement rectilignes et parallèles qui s'appliquent parfaitement l'un sur l'autre, sur toute la largeur du joint à souder, pendant le passage de la torche laser.

En outre, l'invention permet de remplacer très rapidement les mors de serrage sans arrêt du défilement de la bande, pendant la fin du déroulement de la bobine.

A cet effet, la machine de soudage est associée à deux châssis d'attente placés, respectivement, de part et d'autre de la machine et permettant, d'une part d'enlever les mors en service pour les transférer sur un premier châssis d'attente et d'autre part de transférer dans la machine les mors de remplacement se trouvant sur le second châssis d'attente.

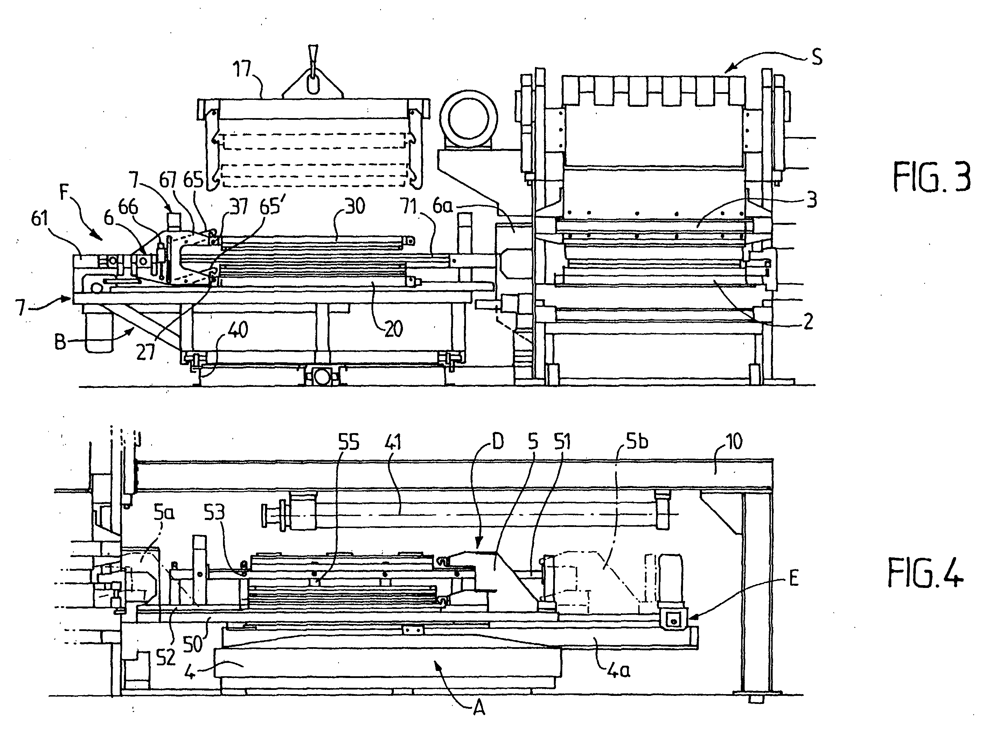

De façon particulièrement avantageuse, l'un des châssis d'attente peut être monté sur un chariot porte-outils du type décrit dans le brevet français N°2.756.504 déjà cité. Ce chariot porte-outils A est représenté schématiquement, en élévation, sur la figure 4 et comprend, essentiellement, un cadre horizontal 4 monté coulissant à l'intérieur d'un bâti fixe 40 sur des rails de guidage 41 parallèles à la direction longitudinale de défilement x'x. Sur le châssis 4 sont montés plusieurs chemins de guidage transversaux, respectivement un premier chemin 4a pour un outillage de remplacement D, un second chemin 4b pour une cisaille double C, un troisième chemin 4c pour un appareillage de soudure laser L et un quatrième chemin 4d pour une raboteuse R.

De la sorte, par déplacement latéral du chariot porte-outils A, il est possible de placer l'un ou l'autre des outillages D, C, L, R, dans une position de travail commune centrée sur un plan moyen Q perpendiculaire à la direction longitudinale de défilement x'x. Comme le montre la figure 4 qui est une vue de côté suivant la ligne III, III de la figure 1, le bâti 10 porte un vérin de manoeuvre 41 centré dans le plan moyen transversal Q et dont la tige est munie d'une tête d'accrochage qui peut s'engager de façon amovible, sur l'outillage placé dans ce plan de travail par déplacement latéral du chariot A. Comme on l'a décrit dans le brevet précédent, il est donc possible, après serrage des extrémités des deux bandes, de commander tout d'abord un déplacement transversal de la cisaille double pour cisailler les deux bords parallèles, puis de rapprocher ceux-ci et, après soudage, d'amener dans le plan de travail un outillage de rabotage R pour l'aplanissement de la soudure lorsque celle-ci a été réalisée par étincelage.

Lorsque la soudure est réalisée par laser, après le cisaillage des bords des extrémités de deux bandes, le chariot porte-outils A se déplace latéralement pour centrer dans le plan de travail Q le chemin de guidage 4c de l'outillage de soudure par laser L et celui-ci est déplacé transversalement, le long du joint, par le même vérin de manoeuvre 41.

Cependant, comme on l'a indiqué, il est nécessaire que la machine de soudage soit équipée de mors de serrage adaptés à la soudure par laser.

Comme on le sait, dans une telle installation, on s'efforce de dégager un côté du chemin de défilement de la bande, appelé "côté opérateur", pour la surveillance du fonctionnement, les moyens d'entraînement et les organes annexes étant placés, normalement, de l'autre côté appelé "côté entraînement".

Comme le montre la figure 1, pour effectuer un remplacement rapide des mors de serrage, on utilise deux châssis d'attente placés de part et d'autre de la machine de soudage S, respectivement un premier châssis E monté sur le chariot porte-outils A déjà cité et un second châssis B constituant un chariot auxiliaire placé de l'autre côté.

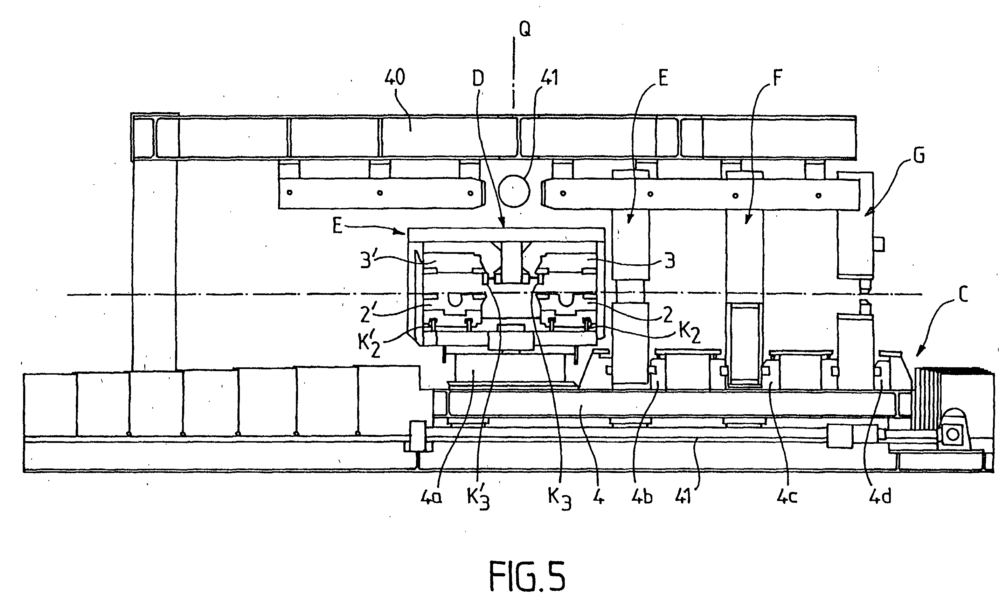

Le chariot porte-outils A, qui est assez encombrant, est placé normalement, du côté entraînement selon la disposition décrite dans le brevet français 2.756.504 déjà cité. Il porte donc le châssis d'attente E des mors "étincelage", de la façon représentée schématiquement sur les figures 4 et 5.

Le chariot auxiliaire B qui sert uniquement de réserve pour les mors "laser", peut être de dimensions assez réduites et est donc placé sur le côté opérateur, de la façon indiquée sur les figures 1 et 3.

D'une façon générale, chaque châssis d'attente E, B doit être muni d'un ensemble de guidage des mors constitué de glissières placées au même niveau et dans le prolongement de glissières correspondantes ménagées sur les mâchoires 12, 13, 12' 13' des deux bâtis 1, 1' de la machine de façon à permettre le transfert des deux paires de mors de la machine S sur un châssis d'attente et inversement, par coulissement sur les ensembles de guidage alignés, perpendiculairement à l'axe longitudinal x'x de défilement.

Lorsque le programme de fabrication prévoit la nécessité d'un changement de mode de soudage, il est intéressant d'effectuer à l'avance l'échange des mors avant l'arrivée, dans la machine de soudage, de l'extrémité aval de la bande en cours de défilement. Les mors massifs adaptés au soudage par étincelage sont donc retirés de la machine et transférés sur le châssis d'attente E monté sur le chariot porte-outils A, dans la position indiquée sur la figure 4. Ils sont immédiatement remplacés, dans la machine, par des mors de serrage adaptés au soudage par laser et venant du chariot auxiliaire B. Le chariot porte-outils A peut alors être déplacé latéralement pour placer l'organe de cisaillage C dans le plan de travail Q et c'est seulement lorsque l'extrémité aval de la première bande arrive au niveau de ce plan, que le défilement est arrêté. On procède alors au cisaillage de la façon qui sera décrite plus loin. Après le cisaillage, la cisaille C est ramenée sur le chariot porte-outils A qui est encore avancé pour centrer l'appareillage de soudure par laser L dans le plan de travail Q et l'on réalise la soudure. On peut alors reprendre le défilement, la seconde bande étant entraînée par la première. Ainsi, le temps d'arrêt de la machine a été limité au temps nécessaire pour le cisaillage, le déplacement du chariot porte-outils et la soudure par laser.

Cependant, pour obtenir un temps d'arrêt minimal, il faut que le remplacement des mors soit effectué sans arrêt du défilement, la bande restant engagée dans la machine de soudage. Pour cela les mors, respectivement supérieur et inférieur des deux organes de maintien doivent être maintenus écartés verticalement pendant leur déplacement de façon à passer, respectivement au dessus et en dessous de la bande.

De plus, chaque mors doit être fixé sur la mâchoire correspondante d'une façon amovible permettant le démontage par coulissement transversal du mors.

Comme le montre schématiquement la figure 2, chaque mors inférieur 2, 2' est fixé sur la mâchoire correspondante 12, 12' par deux rangées de vérins 21 à section en double T comprenant chacun une partie inférieure, formant piston, logée dans une chambre ménagée dans la mâchoire 12 et une partie supérieure élargie qui s'engage dans une rainure 22 de profil correspondant, ménagée dans la partie inférieure du mors 2. De plus, comme le montre la figure 2a qui est une vue de détail à échelle agrandie, la partie supérieure de chaque vérin 21 porte un galet 23 à axe parallèle à l'axe longitudinal x'x qui, dans la position haute du vérin 21, vient s'appuyer sur le fond de la rainure 22 pour soulever le mors 2.

Les vérins 21 sont à double effet et déterminent donc, dans un sens l'application et la fixation du mors 2 sur la mâchoire correspondante 12 et, dans l'autre sens, un léger soulèvement du mors 2 qui peut coulisser axialement en roulant sur les galets 23.

Les deux rangées de vérins 21 coulissant dans les rainures 22 du mors 2 constituent un chemin de guidage G2 de celui-ci.

La bande M, qui reste engagée dans la machine, est maintenue par des rouleaux de soutien 16, 16' qui sont montés rotatifs, respectivement, sur les côtés du bâti correspondant 1, 1', chaque rouleau 16, 16' passant dans un évidement correspondant du mors inférieur 2, 2' avec un jeu suffisant pour permettre les déplacements verticaux du mors 2.

Au dessus de la bande M, chaque mors supérieur 3, 3' est fixé sur la mâchoire correspondante 13, 13' par des vérins 31 disposés en deux rangées perpendiculaires à la direction longitudinale x'x. Comme le montre la figure 2b, qui est une vue, à échelle agrandie, du mors supérieur 3, chaque vérin 31 présente une section en double T et comprend une partie supérieure formant piston, logée dans un évidement 32 de la mâchoire supérieure 13 et formant la chambre d'un vérin à double effet, et une partie inférieure qui s'engage dans une rainure transversale 33 de profil correspondant, ménagée sur la partie supérieure du mors 3. Ce dernier est muni de deux profilés 34a, 34b qui prennent appui, en position abaissée, respectivement sur deux rangées de galets 15a, 15b montés sur des pattes de suspension fixées sur la mâchoire supérieure correspondante 13.

De la sorte, les vérins à double effet 32 déterminent, dans un sens, le soulèvement du mors supérieur 3 qui vient s'appliquer et se fixer sur la mâchoire 13 et, dans l'autre sens, l'abaissement du mors 3 qui vient reposer sur les galets 15a, 15b qui constituent un chemin de roulement G3 coopérant avec les rainures 33 pour assurer un guidage coulissant du mors 3, perpendiculairement à la direction longitudinale x'x, à un niveau déterminé par des galets 15.

Bien entendu le démontage des mors s'effectue dans une position déterminée des mâchoires, respectivement inférieures 12, 12' et supérieures 13, 13'. A cet effet, les montants latéraux des deux bâtis 1, 1' sont munis de tronçons de rails de guidage non représentés placés, respectivement, au niveau des chemins de guidage G2, G3 constitués, respectivement, par les rangées de galets 23 de roulement des mors inférieurs 2, 2' et 15 de roulement des mors supérieurs 3, 3', dans la position de démontage desdits mors.

Comme on l'a indiqué plus haut, pour retirer les mors ou les remettre en place, on utilise deux outillages de remplacement D et F montés sur deux châssis d'attente E, B placés respectivement de part et d'autre de la machine S et portant des chemins de guidage placés au même niveau et dans le prolongement des chemins de guidage G2, G3 des mâchoires et des tronçons de rails portés par les montants latéraux des deux bâtis 1, 1'. De la sorte, il est possible de retirer les deux paires de mors ou, inversement, de les remettre en place, en passant, au dessus et en dessous de la bande qui reste engagée dans la machine.

La figure 4 montre, en élévation, un 'outillage D de remplacement des deux paires de mors "étincelage" 2, 3, 2', 3' de type massif, représentés sur la figure 2 dans leur position de service pour laquelle ils sont fixés sur les mâchoires correspondantes 12, 13, 12', 13'.

Comme indiqué précédemment, le chariot porte-outils A est constitué d'un châssis 4 sur lequel sont montés plusieurs chemins de guidage transversal et, en particulier, un chemin de guidage 4a pour un outillage de remplacement D des mors "étincelage" monté dans un châssis d'attente E qui peut coulisser sur le chemin de guidage 4a entre une position avancée (indiquée en trait plein sur la figure 4), pour laquelle l'extrémité du châssis d'attente E est rapprochée de la machine de soudage S et une position reculée (indiquée en trait mixte), qui permet les déplacements du chariot porte-outils A.

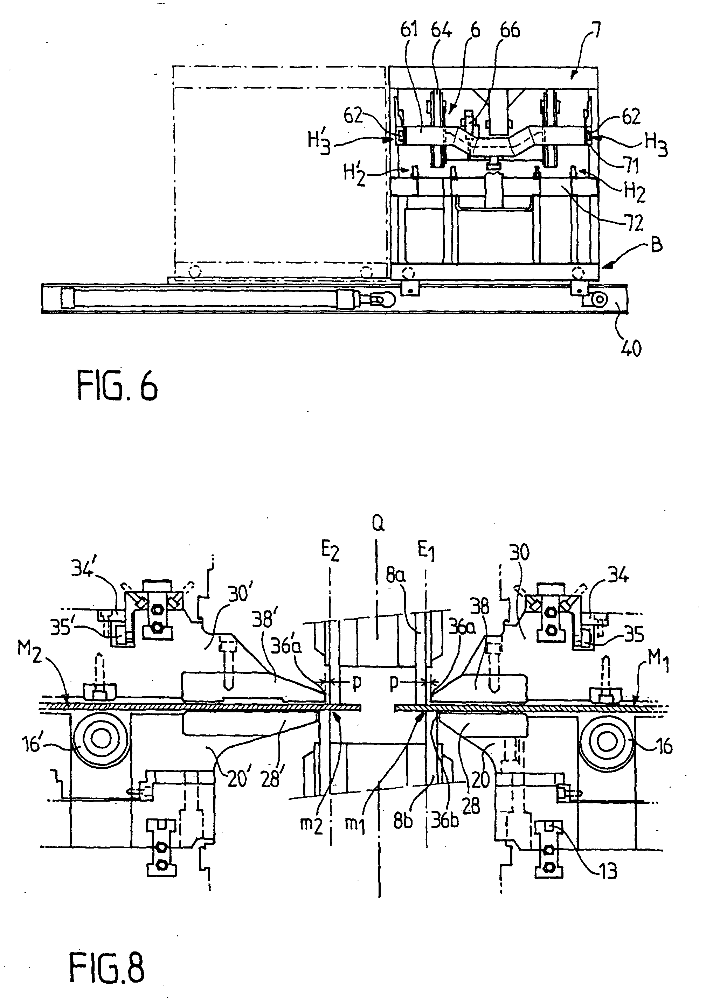

De façon analogue, l'outillage F de remplacement des mors adaptés au soudage laser est monté dans un châssis d'attente B constituant un chariot auxiliaire placé de l'autre côté du chariot porte-outils A par rapport à la machine S et qui peut se déplacer, parallèlement à l'axe longitudinal x'x, sur des rails 42, entre une position de service, représentée en trait plein sur la figure 6, pour laquelle les deux paires de mors laser sont centrées sur le plan de travail Q et une position reculée représentée schématiquement en trait mixte sur la figure 6 et pour laquelle la machine de soudage S est dégagée du côté opérateur.

Comme l'indique schématiquement la figure 1, la machine S est avantageusement équipée d'une hotte 18 reliée à un circuit d'aspiration des résidus de soudage, qui est montée pivotante sur le bâti fixe 1 et peut être écartée pour avancer le chariot auxiliaire B en position d'échange des mors et remise en place après le transfert, dans la machine, des mors laser et le recul du chariot.

Le chariot auxiliaire B est constitué d'un châssis en forme de cadre 7 à l'intérieur duquel l'outillage de remplacement F est monté coulissant perpendiculairement à l'axe longitudinal x'x de la machine.

L'outillage de remplacement F comprend un organe 6 d'accrochage des mors, monté sur un chariot constitué d'un châssis 61 en forme de plateau horizontal, qui est porté par deux paires de galets 62 pouvant rouler dans des cornières 71 à section en C ménagées sur les deux côtés du châssis 7 du chariot auxiliaire B.

L'organe d'accrochage 6 est porté par deux flasques écartés 64 fixés sur le plateau 61 et sur lesquels sont articulées deux paires de crochets, respectivement des crochets supérieurs 65 et des crochets inférieurs 65' constitués de deux bras articulés autour d'axes horizontaux et formant un parallélogramme déformable actionné par un vérin 66.

Les flasques 64 portent eux-mêmes deux paires de bras fixes 67 qui viennent en butée sur les mors laser 20, 30 et ces derniers sont munis de tiges d'accrochage 27, 37 qui, dans la position de butée, sont placées au niveau d'encoches ménagées aux extrémités des bras d'accrochage 65, 65'. De la sorte, après accrochage sur les tiges 27, 37, le chariot 6 peut retirer ou repousser les mors laser 20, 30, soit pour les introduire dans la machine de soudage A, soit pour les retirer.

A cet effet, le châssis 7 du chariot auxiliaire B porte un ensemble de guidage H comprenant deux étages d'organes de guidage transversal H2, H3 placés respectivement, au niveau et dans l'alignement des organes de guidage correspondants G2, G3 de la machine S, dans la position de démontage des mors.

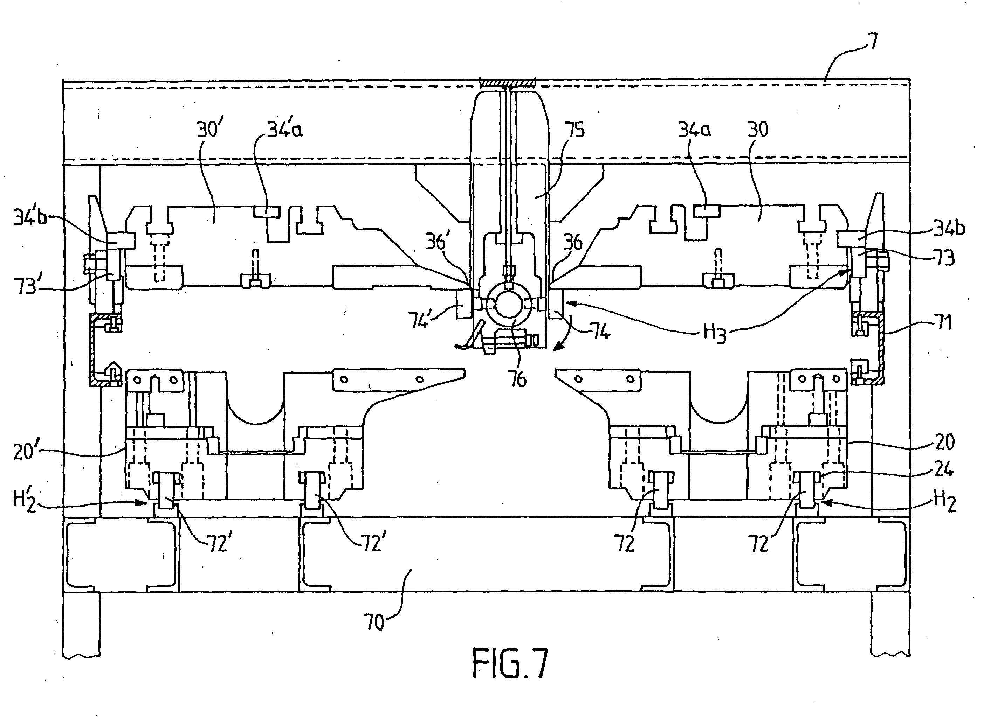

Ces organes de guidage H2, H3 sont représentés en détail sur la figure 7 qui est une coupe transversale de la partie supérieure du cadre 7 de l'outillage de remplacement des mors "laser".

A l'étage inférieur, le châssis 7 porte une table intermédiaire 70 sur laquelle sont montés deux chemins de guidage inférieur H2, H'2 constitués chacun d'une paire de rails horizontaux 72 qui sont placés dans l'alignement des rangées de vérins 21 et dont les faces supérieures sont ménagées au niveau des galets 23 constituant le chemin de guidage central G2, dans la position de démontage des mors inférieurs 2, 2'.

A l'étage supérieur, le châssis 7 de support de l'outillage de remplacement F est muni, sur ses côtés, respectivement de deux rangées de galets 73, 73' formant un chemin de guidage supérieur H3 qui s'étend au même niveau et dans l'alignement du chemin de guidage central G3 comprenant les deux rangées de galets 15b, 15'b de support des parties arrières des mors supérieurs 3, 3' dans la position soulevée des mâchoires 13, 13'. Dans cette position, les galets arrières 15b, 15'b des mâchoires 13, 13' forment donc, avec les galets 73, 73' du châssis 7, un chemin de roulement continu sur lequel peuvent coulisser les plats 34b, 34'b placés respectivement à l'arrière des deux mors supérieurs 30, 30'.

Il serait également possible de placer, à la partie supérieure du châssis 7, deux rangées de galets disposés respectivement dans le prolongement des rangées de galets 15a, 15'a d'appui de la partie avant des mors 3, 3'. Cependant, après le retrait de la machine de soudage, les mors doivent pouvoir être transportés en atelier, pour vérification et il est avantageux, à cet effet, de les retirer du châssis 7.

Sur la figure 3, par exemple, on a représenté un palonnier de démontage 17, manoeuvré par un pont roulant et portant deux paires de bras d'accrochage articulés qui peuvent s'engager sur des tiges de manoeuvre 27, 37 des mors de serrage pour soulever ces derniers et les transporter en atelier pour entretien ou remplacement.

Pour permettre le soulèvement des mors supérieurs 30, 30', ces derniers reposent simplement sur une ligne d'appui centrale du châssis 7, constituée de deux rangées de galets 74, 74' montés sur des supports verticaux 75 fixés sur une poutre centrale du châssis 7, dans le plan longitudinal de symétrie de celui-ci et qui définissent un plan d'appui placé au niveau des faces inférieures des extrémités avant 36, 36' des deux mors supérieurs 30, 30' lorsque ces derniers sont en position de démontage.

Ainsi, lorsque l'on retire un mors 30 de la machine de soudage S, le chemin de guidage central G3 constitué par les rangées de galets 15a, 15b sur lesquelles prennent appui les profilés 34a, 34b est remplacé par un chemin de guidage latéral H3 constitué, pour chaque mors supérieur 30, par les deux rangées de galets 73 et 74 sur lesquelles prennent appui, respectivement la partie arrière et l'extrémité avant 36 du mors 30. Le déplacement de celui-ci s'effectue donc sans changement de niveau en passant de la machine S au châssis d'attente B et, inversement, dans l'autre sens pour l'introduction des mors en attente dans la machine S.

Pour ne pas gêner le soulèvement des mors inférieurs 20, 20' afin de les retirer du châssis 7, les galets de support 74, 74' sont montés sur un arbre 76 pouvant tourner autour d'un axe horizontal. Par rotation de l'arbre 76, les galets 74, 74' viennent se placer dans le plan longitudinal de symétrie des supports 75 et ne s'opposent plus au passage des mors inférieurs 20, 20'.

Sur la figure 4, on a représenté, l'outillage D de remplacement des mors "étincelage" qui est analogue à l'outillage F de remplacement des mors "laser" et comprend donc un organe d'accrochage 5 monté coulissant, perpendiculairement à l'axe longitudinal x'x, sur un châssis d'attente E comprenant une table horizontale 50 montée coulissante sur le chemin de guidage 4a du chariot porte-outils 4 et deux montants latéraux portant des rails de guidage 51 d'une table de support de l'organe d'accrochage 5.

Le châssis E est muni, d'autre part, d'un ensemble de guidage latéral K analogue à l'ensemble de guidage H du châssis d'attente B des mors laser, comportant deux étages K2, K3 placés aux mêmes niveaux que les chemins correspondants G2, G3 de l'ensemble central G, respectivement un chemin de guidage inférieur K2 constitué de deux paires de rails 52 montés sur la table inférieure 50, dans l'alignement des rangées 21 des mâchoires 12, 12' et un chemin de guidage supérieur K3 comprenant deux rangées de galets d'appui arrière placées dans l'alignement des rangées de galets 15b et deux rangées de galets d'appui avant montées sur des supports écartés, dans le plan longitudinal de symétrie du châssis E, au niveau des faces inférieures des mors supérieurs 3, 3'.

Les dispositions qui viennent d'être décrites permettent de réaliser le remplacement des mors d'étincelage par des mors laser et inversement, sans arrêt du défilement et en quelques minutes, cette opération pouvant ainsi être réalisée pendant la fin du déroulement de la bobine.

Si l'on se réfère, par exemple, à la figure 3, la machine de soudage S est équipée des mors massifs, respectivement inférieur 2 et supérieur 3, adaptés au soudage par étincelage. Pour remplacer ces mors, on commande tout d'abord un déplacement latéral du châssis porte-outils A et du chariot auxiliaire B de façon à centrer dans le plan de travail Q, respectivement le châssis E de support des mors "étincelage" qui, à ce moment, est vide et le châssis B sur lequel sont placés en attente les mors "laser" 20, 30.

On avance alors le chariot d'accrochage 5 des mors "étincelage" qui est identique au chariot d'accrochage 6 des mors "laser" et porte donc deux paires de crochets qui, dans la position avancée 5a indiquée en traits mixtes sur la figure 4, viennent s'engager sur des tiges d'accrochage 27, 37 des mors "étincelage" 2, 3, 2', 3'.

Un recul du chariot d'accrochage 5 permet alors de transférer les mors d'étincelage sur le châssis E dans la position représentée en trait plein sur la figure 4, en coulissant sur les chemins de guidage K2, K3 du châssis d'attente E.

On recule alors l'ensemble du châssis E, avec le chariot d'accrochage 5 et les mors, dans la position 5b représenté en traits mixtes à droite de la figure 4, de façon à dégager le côté entraînement de la machine de soudage S.

Les mors "étincelage" étant ainsi retirés, on peut les remplacer par les mors "laser" 20, 30 en avançant le chariot d'accrochage 6 jusqu'à la position 6a représentée en traits mixtes sur la figure 3. Les mors "laser" coulissent horizontalement de la façon indiquée plus haut sur les chemins de guidage H2, H3 pour venir se placer à l'intérieur de la machine S. Les mors inférieurs 20 passent sur le chemin central inférieur G2 constitué par les galets 23 des rangées de vérins 21 et les mors supérieurs 30 passent sur le chemin central supérieur G3 constitué par les rangées de galets 15a, 15b des mâchoires supérieurs 13, 13'.

On peut alors actionner les vérins de serrage 21, 31, pour appliquer et fixer les mors "laser" 20, 20', 30, 30', respectivement sur les mâchoires inférieures 12, 12' et sur les mâchoires supérieures 13, 13' des deux bâtis 1, 1'.

Toutes ces opérations peuvent être réalisées très rapidement. En particulier, l'avancement des mors "laser" venant du châssis B, à gauche de la machine sur la figure 3, peut se faire en même temps que le retrait des mors "étincelage" sur le châssis E, à droite de la figure 4. Le remplacement des mors est donc pratiquement immédiat.

Les deux paires de mors "laser" étant ainsi fixées sur les mâchoires, respectivement 12, 12', 13, 13', on fait avancer la première bande M1 et la bande suivante M2 de telle sorte que leurs extrémités, respectivement aval et amont se trouvent de part et d'autre du plan de travail Q. On commande alors le serrage, respectivement des mors amont 20, 30 sur la bande M1 et des mors aval 20', 30' sur la bande M2 dans la position représentée sur la figure 7.

On peut alors procéder au cisaillage des extrémités des deux bandes M1, M2.

A cet effet, on utilise avantageusement une cisaille double 8 du type décrit dans le brevet précédent 2.756.504, qui comprend deux paires de lames circulaires, respectivement une lame supérieure 8a et une lame inférieure 8b. On définit ainsi deux plans de cisaillement, respectivement amont E1 et aval E2 écartés de part et d'autre du plan de travail Q.

Pour réaliser le cisaillement, les lames de chaque paire sont placées de part et d'autre du plan de cisaillement, les lames supérieures 8a étant décalées, de préférence, vers l'intérieur et les lames inférieures 8b vers l'extérieur.

Comme on l'a indiqué, les mors "laser" 20, 30 et les mors "étincelage" 2, 3 sont fixés et guidés de la même façon sur les mâchoires 12, 12', 13, 13' des deux organes de maintien mais ils diffèrent essentiellement par la forme de leur partie avant tournée vers le plan de cisaillage.

Les mors "étincelage" sont réalisés de façon classique et, comme le montre schématiquement la figure 5, leur partie de serrage avant est assez massive pour permettre l'application d'un effort longitudinal de forgeage du joint pendant la soudure.

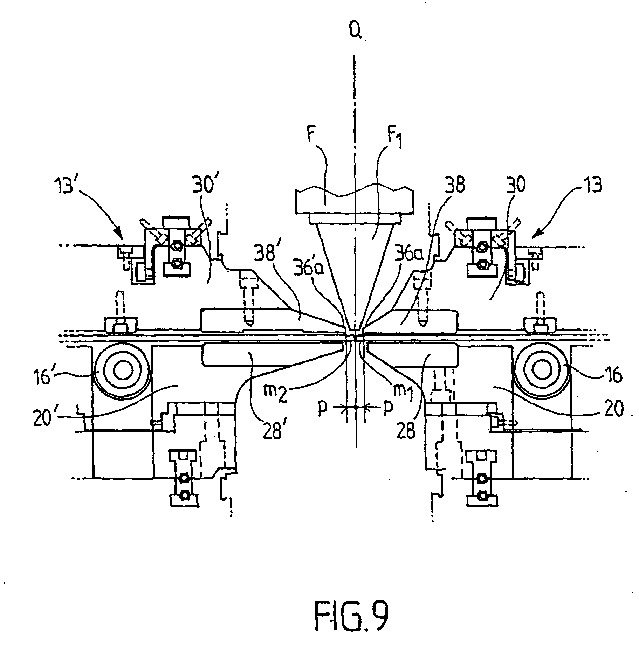

En revanche, comme le montrent les figures 7, 8, 9, les parties de serrage avant des mors "laser" 20, 30, 20', 30' forment un bec effilé 28, 38, 28', 38' qui s'avance en pointe jusqu'à une extrémité 36, 36' aussi rapprochée que possible du plan de cisaillement E1, E2. Comme le montre la figure 8, les becs ainsi formés aux extrémités des mors de serrage ne sont pas nécessairement symétriques, leur forme effilée dépendant du gabarit à laisser pour le passage de la partie de l'appareillage laser qui doit rester proche de la soudure. D'une façon générale, les faces externes des parties de serrage 28, 38, 28', 38' seront inclinées par rapport à l'horizontale d'un angle supérieur à 45°.

Par ailleurs, il est avantageux, comme le montre la figure 8, de réaliser un léger décalage de l'extrémité 36a du mors supérieur 30 par rapport à l'extrémité 36b du mors inférieur 20 qui est placée légèrement en retrait. De la sorte, la lame inférieure 8b peut passer en partie au dessous du bec supérieur 38 de façon que le plan de cisaillement E1 se trouve aussi près que possible de l'extrémité 36a de celui-ci. Le porte-à-faux (p), c'est à dire la distance entre le plan de cisaillement E1 et l'extrémité 35a du mors peut ainsi être aussi réduit que possible et se limite, en pratique, à quelques millimètres.

Grâce à la forme effilée des becs 35 des mors de serrage et au très faible porte-à-faux (p) qui peut ainsi être ménagé entre le plan de cisaillement et les extrémités 36 des mors, les deux tôles sont parfaitement maintenues par les mors de serrage jusqu'à proximité immédiate du plan de cisaillement. On peut ainsi réaliser une ligne de cisaillement parfaitement rectiligne. En outre, l'utilisation d'une cisaille double comportant deux paires de lames montées sur un même support permet de réaliser deux lignes de cisaillement rigoureusement parallèles.

Il est à noter que le décalage de l'extrémité 36b du mors inférieur 20 par rapport à l'extrémité 36a du mors supérieur 30 améliore encore la qualité du cisaillement, la tôle étant plaquée sur le mors supérieur par la lame inférieure 8b.

Ayant ainsi réalisé deux lignes de cisaillement rigoureusement parallèles m1, m2, on peut rapprocher celles-ci par déplacement du bâti mobile 1', dans la position représentée sur la figure 9. En même temps, par déplacement du chariot porte-outils A, on a placé l'appareillage de soudure par laser L dans une position de travail centrée sur le plan Q. Comme le montre la figure 9, les porte-à-faux (p) laissés entre chaque ligne de cisaillement et le mors correspondant sont déterminés de façon que la distance 2p existant entre les extrémités en regard 36a, 36'a, des mors supérieurs 30, 30' permette simplement le passage de la torche laser L qui se déplace le long du joint sous l'action du vérin de manoeuvre 41.

L'ensemble de l'installation qui vient d'être décrite permet donc d'effectuer le soudage des bandes soit par étincelage, soit par laser, en utilisant des mors de serrage spéciaux qui permettent de réaliser un cisaillage parfait des bords à mettre en contact. Le remplacement des mors d'étincelage par des mors laser peut se faire très rapidement et en maintenant la bande en défilement à l'intérieur de la machine.

Il en résulte que le changement de mors n'augmente pas le temps d'arrêt du défilement nécessaire, de toutes façons, pour le raboutage de deux bandes successives.

Mais l'invention ne se limite pas aux détails du mode de réalisation qui vient d'être décrit à titre d'exemple, et pourraient faire l'objet de variantes sans s'écarter du cadre de protection défini par les revendications.

En particulier, les mors de serrage qui ont été décrits pourraient avoir une autre forme permettant d'assurer un excellent cisaillage et laissant le passage d'une torche laser.

D'autre part, d'autres moyens de guidage pourraient être utilisés pour permettre le coulissement transversal des mors depuis un châssis d'attente jusqu'à la machine et inversement.

Enfin, il est avantageux d'utiliser un chariot porte-outils tel que décrit dans le brevet précédent 2.756.504 mais les moyens selon l'invention pourraient être adaptés à d'autres dispositions constructives.

Il est à noter, d'ailleurs, que l'invention a été mise au point spécialement pour la réalisation, en cas de besoin, d'un soudage par laser mais on pourrait aussi envisager d'autres modes de soudure, par exemple par soudage à arc ou par faisceau d'électrons.

Les signes de référence insérés après les caractéristiques techniques mentionnées dans les revendications, ont pour seul but de faciliter la compréhension de ces dernières et n'en limitent aucunement la portée.

## Revendications

1. Machine à rabouter deux bandes métalliques (M1, M2) se déplaçant l'une après l'autre suivant une direction longitudinale de défilement (x'x), comprenant deux bâtis de maintien (1, 1') déplaçables longitudinalement l'un par rapport à l'autre, sur lesquels sont montés, respectivement, deux organes de maintien, respectivement (11), de l'extrémité aval, dans le sens de défilement, d'une première bande (M1) et (11') de l'extrémité amont d'une seconde bande (M2), comprenant chacun, de part et d'autre d'un plan de défilement des bandes, deux mâchoires (12, 13) (12', 13') sur lesquelles sont fixés, de façon amovible, deux paires de mors (2, 3) (2', 3') de serrage, respectivement, de l'extrémité de chaque bande (M1, M2), lesdites mâchoires étant déplaçables entre une position écartée de démontage des mors et une position resserrée, et des moyens de soudage de deux bords parallèles (m1, m2) ménagés respectivement sur lesdites extrémités, respectivement aval et amont, des deux bandes (M1, M2), après rapprochement desdits bords par déplacement longitudinal l'un vers l'autre desdits organes de maintien (11, 11'), lesdits moyens de soudage fonctionnant respectivement selon au moins deux modes de soudure différents (V, L),
**caractérisée par le fait qu'**elle est équipée d'au moins deux ensembles de mors de serrage (2, 3, 2', 3') (20, 30, 20', 30') adaptés, pour chaque ensemble, respectivement à chaque mode de soudure (V, L), lesdits mors de serrage étant montés de façon coulissante sur chaque mâchoire correspondante (12, 13) (12', 13') et associés à des moyens de transfert (D, F), respectivement d'un premier ensemble de mors (2, 3) (2', 3') depuis une position de travail (S) centrée sur l'axe de défilement (x'x) vers une position d'attente écartée latéralement et d'un second ensemble (20, 30) (20', 30'), depuis une position d'attente vers la position de travail (S).

2. Machine à rabouter selon la revendication 1, **caractérisé par le fait qu'**elle comprend un ensemble central de guidage (G) comprenant, sur chaque bâti (1, 1'), une paire de chemins de guidage (G2, G3) ménagés respectivement sur les deux mâchoires (12, 13) de chaque organe de maintien (11, 11') et comprenant chacun au moins une glissière (21, 15) de support coulissant, respectivement de chaque mors de l'organe de maintien correspondant (11, 11') chaque chemin de guidage central (G2, G3) s'étendant, transversalement à la direction de défilement (x'x), entre deux côtés latéraux du bâti (1, 1') de la machine (S) et que celle-ci est associée à au moins un châssis d'attente placé sur au moins un côté de la machine (S) et portant au moins un ensemble latéral de guidage (H) comprenant deux paires de chemins de guidage (H2, H3, H'2, H'3) respectivement des deux mors de chaque organe de maintien (11, 11') comprenant chacun au moins une glissière (72, 73) placée respectivement dans le prolongement de la glissière correspondante (21, 15) de la mâchoire (12, 13) correspondante, au moins dans une position relative du châssis d'attente par rapport aux deux bâtis (1, 1') permettant le transfert, par coulissement sur les glissières alignées, d'un premier ensemble de mors de serrage (2, 3, 2', 3') de leur position de travail (S) vers le châssis d'attente et, inversement, d'un second ensemble de mors de serrage (20, 30, 20', 30') du châssis d'attente vers la position de travail (S).

3. Machine à rabouter selon la revendication 2, **caractérisée par le fait qu'**elle comprend deux ensembles latéraux de guidage, respectivement, un premier ensemble latéral (K) initialement vide pour la réception d'un premier ensemble de mors de serrage (2, 3, 2', 3') venant de la position de travail (S) par coulissement sur les glissières alignées, respectivement (21, 15) de l'ensemble central de guidage (G) et (52, 53) dudit premier ensemble latéral (K), et un second ensemble latéral de guidage (H) pour le support en attente d'un second ensemble de mors de serrage (20, 30) (20', 30') et le transfert de ceux-ci dans la position de travail (S) après retrait du premier ensemble de mors (2, 3) (2', 3') et alignement des glissières (72, 73) dudit second ensemble latéral (H) avec celles (21, 15) de l'ensemble central de guidage (G).

4. Machine à rabouter selon la revendication 3, **caractérisée par le fait que** les deux ensembles latéraux de guidage (K, H) sont ménagés respectivement sur deux châssis d'attente (E, B) placés de part et d'autre de la machine (S), l'ensemble central (G) et les deux ensembles latéraux (K, H) étant centrés sur un même plan moyen transversal (Q) pour une position relative des deux bâtis de maintien (1, 1') dans laquelle chaque glissière (21, 15) de l'ensemble central (G) est alignée, à chaque extrémité, avec une glissière correspondante (52, 53) (72, 73) d'un ensemble latéral (K, H).

5. Machine à rabouter de soudage selon la revendication 4, **caractérisée par le fait qu'**un premier ensemble de mors de serrage (2, 3) (2', 3') est monté, en position de travail, sur l'ensemble central de guidage (G) et qu'un second ensemble de mors de serrage (20, 30) (20', 30') est monté en position d'attente sur les glissières (72, 73) d'un ensemble latéral de guidage (H) ménagé sur un second châssis d'attente (B), et que la machine (S) comprend des moyens (D, F) de transfert simultané du second ensemble de mors (20, 30) (20', 30') de sa position d'attente (B) vers la position de travail (S) sur l'ensemble central de guidage (G) avec retrait du premier ensemble de mors (2, 3) (2', 3') et transfert de celui-ci de sa position de travail (S) vers une position d'attente sur un ensemble latéral de guidage (K) ménagé sur un premier châssis d'attente (E), de l'autre côté de la machine (S).

6. Machine à rabouter selon l'une des revendications 2 à 5, dans laquelle chaque bâti de maintien (1, 1') comprend deux mâchoires (12, 13) (12', 13') sur lesquelles sont fixés de façon amovible, respectivement les deux mors de l'organe de maintien (11, 11') correspondant, lesdites mâchoires (12, 13) (12', 13') étant déplaçables l'une par rapport à l'autre perpendiculairement au plan de défilement entre une position de serrage des mors et une position écartée, **caractérisée par le fait que** les glissières des deux ensembles latéraux de guidage (H, K) sont ménagées à deux niveaux (H2, H3) (K2, K3) correspondant respectivement aux niveaux des glissières (21, 15) de l'ensemble central (G) ménagées respectivement sur les deux mâchoires de chaque bâti (1, 1'), dans la position écartée des mors de serrage, de façon à permettre le transfert et le remplacement de ces derniers en passant, respectivement, au dessus et en dessous du plan de défilement des bandes.

7. Machine à rabouter selon l'une des revendications précédentes, **caractérisée par le fait qu'**elle comprend un premier ensemble de mors de serrage (2, 3) (2', 3') qui, dans la position de travail (S), sont reliés respectivement à deux bornes d'une source de courant électrique pour réaliser le soudage par étincelage, et un second ensemble de mors de serrage (20, 30) (20', 30') adaptés au passage d'une torche à laser défilant suivant une direction transversale parallèle aux bords à souder après mise en contact de ceux-ci.

8. Machine à rabouter selon la revendication 5, **caractérisée par le fait que** les mors du premier ensemble de mors de serrage (2, 3) (2', 3'), adaptés au soudage par étincelage comprennent chacun une partie de fixation amovible sur la mâchoire (12, 13) (12', 13') prolongée, du côté du bord à souder, par une lèvre assez épaisse pour permettre l'application d'une pression de forgeage entre les bords à souder et que les mors du second ensemble (20, 30) (20', 30') adaptés au soudage par laser comprennent chacun une partie de fixation amovible sur la mâchoire (12, 13) (12', 13') prolongée, du côté du bord à souder par un bec (38) s'étendant le plus près possible du bord à souder pour maintenir la bande sur toute sa largeur pendant le cisaillage, ledit bec (38) étant assez mince pour permettre le passage d'un appareillage (L) de soudage par faisceau laser.

9. Procédé de raboutage de deux bandes métalliques (M1, M2) se déplaçant l'une après l'autre suivant une direction longitudinale de défilement (x'x), en passant dans une machine de soudage comprenant deux organes de maintien (11, 11') montés respectivement sur un bâti fixe (1) et sur un bâti mobile (1') déplaçable longitudinalement par rapport au bâti fixe, chaque organe de maintien comprenant deux mors de serrage (2, 3) (2', 3') placés respectivement au dessus et en dessous d'un plan sensiblement horizontal de défilement des bandes et fixés de façon amovible, respectivement sur deux mâchoires (12, 13) (12', 13') déplaçables verticalement, l'une par rapport à l'autre, entre une position écartée et une position resserrée des mors,
**caractérisé par le fait que** l'on réalise le soudage de deux bandes successives selon l'un ou l'autre d'au moins deux modes de soudage différents en fonction de la nature et/ou de l'épaisseur des bandes et que l'on dispose d'au moins deux ensembles de mors de serrage adaptés chacun à l'un des modes de soudage, respectivement un premier ensemble de mors qui est monté en service dans la machine et au moins un second ensemble qui est placé en réserve à côté de la machine, de telle sorte que, en cas de changement de mode de soudage, le premier ensemble de mors utilisés précédemment pour le soudage selon un premier mode puisse être enlevé de la machine et remplacé immédiatement par le second ensemble de mors adapté au second mode de soudage.

10. Procédé de raboutage selon la revendication 9, **caractérisé par le fait que** le remplacement des mors est effectué dans la position écartée des mâchoires, par coulissement des mors, respectivement au dessus et en dessous du plan de défilement de la bande et sans contact avec celle-ci, de telle sorte que, en cas de changement de mode de soudage entre l'extrémité aval d'une première bande et l'extrémité amont d'une seconde bande, le retrait du premier ensemble de mors adaptés au mode de soudage précédent et la mise en place, dans la machine, du second ensemble de mors adaptés au mode de soudage suivant, s'effectuent pendant la fin du déroulement de la première bande et sans arrêt du défilement de celle-ci.

11. Procédé de raboutage selon l'une des revendications 9 et 10, **caractérisé par le fait que**, pour changer de mode de soudure, le premier ensemble de mors (2, 3, 2', 3') adaptés au mode de soudage précédent, est retiré de la machine (S) et transféré sur un premier châssis d'attente (E) placé sur un premier côté de la machine (S) et que le second ensemble de mors (20, 30, 20', 30') adaptés au mode de soudage suivant est transféré dans la machine (S) à partir d'un second châssis d'attente (B) placé au préalable en réserve sur le second côté de la machine (S).

## Claims

1. A machine for butting together metal bands (M1, M2) moving one after the other along a longitudinal running axis (x'x), comprising two locking stands (1, 1') that can be moved longitudinally with respect to one another, on which are mounted, respectively, two members for locking (11), respectively, the downstream end, in the running direction, of a first band (M1) and (11') the upstream end of a second band (M2), each comprising, on either side of a running plane of the bands, two vices (12, 13) (12', 13') on which are fixed, in a removable fashion, two pairs of jaws (2, 3) (2', 3') for clamping, respectively, the end of each band (M1, M2), whereas the said vices can be moved from a spaced apart position in which the jaws can be removed, and a close position, and means for welding two parallel edges (m1, m2) provided respectively on the said ends, respectively downstream and upstream, of both bands (M1, M2), after bringing the said edges closer to one another by longitudinal displacement of the said locking members (11, 11') towards one another, whereas the said welding means operate respectively at least according to two different welding modes (V, L),
**characterised in that** it is provided with at least two clamping jaw assemblies (2, 3, 2', 3') (20, 30, 20', 30') suitable, for each assembly, respectively to each welding mode (V, L), whereas the said clamping jaws are mounted in order to slide over each corresponding vice (12, 13) (12', 13') and connected with transfer means (D, F), respectively of a first jaw assembly (2, 3) (2, 3') from a working position (S) centred on the running axis (x'x) to a laterally spaced apart standby position and of a second assembly (20, 30) (20', 30'), from a standby position to the working position (S).

2. A butting machine according to claim 1, **characterised in that** it comprises a central guiding assembly (G) comprising, on each stand (1, 1'), a pair of guiding paths (G2, G3) provided respectively on both vices (12, 13) of each locking member (11, 11') and comprising each at least one supporting rail (21, 15) sliding, respectively for each jaw of the corresponding locking member (11, 11'), whereas each central guiding path (G2, G3) extends transversally to the running direction (x'x), between two lateral sides of the stand (1, 1') of the machine (S) and the said machine is connected with at least one standby chassis placed on at least one side of the machine (S) and carrying at least one lateral guiding assembly (H) comprising two pairs of guiding paths (H2, H3, H'2, H'3) respectively for both jaws of each locking member (11, 11') each comprising of at least one rail (72, 73) placed respectively in the extension of the corresponding rail (21, 15) of the corresponding vice (12, 13), at least in a relative position of the standby chassis with respect to both stands (1, 1') to allow transfer, by sliding on the aligned rails, of a first clamping jaw assembly (2, 3, 2', 3') from their working position (S) to the standby chassis and, conversely, of a second clamping jaw assembly (20, 30, 20', 30') from the standby chassis to the working position (S).

3. A butting machine according to claim 2, **characterised in that** it comprises two lateral guiding assemblies, respectively, a first lateral assembly (K) that is empty initially for the reception of a first clamping jaw assembly (2, 3, 2', 3') from the working position (S) by sliding over the aligned rails, respectively (21, 15) of the central guiding assembly (G) and (52, 53) of the said first lateral assembly (K), and a second lateral guiding assembly (H) for standby support of a second clamping jaw assembly (20, 30) (20', 30') and transfer of the said clamping jaws into the working position (S) after retraction of the said jaw assembly (2, 3) (2', 3') and alignment of the rails (72, 73) of the said second lateral assembly (H) with those (21, 15) of the central guiding assembly (G).

4. A butting machine according to claim 3, **characterised in that** both lateral guiding assemblies (K, H) are provided respectively on two standby chassis (E, B) placed on either side of the machine (S), whereas the central assembly (G) and both lateral assemblies (K, H) are centred on a same mean transversal plane (Q) for relative position of both locking stands (1, 1') in which each rail (21, 15) of the central assembly (G) is aligned at each end, with a corresponding rail (52, 53) (72, 73) of a lateral assembly (K, H).

5. A butt welding machine according to claim 4, **characterised in that** a first clamping jaw assembly (2, 3) (2', 3') is mounted, in working position, on the central guiding assembly (G) and a second clamping jaw assembly (20, 30) (20', 30') is mounted in standby position on the rails (72, 73) of a lateral guiding assembly (H) provided on a second standby chassis (B), whereas the machine (S) comprises means (D, F) for simultaneous transfer of the second jaw assembly (20, 30) (20', 30') from its standby position (B) to the working position (S) on the central guiding assembly (G) with retraction of the first jaw assembly (2, 3) (2', 3') and transfer of the said assembly from its working position (S) to a standby position on a lateral guiding assembly (K) provided on a first standby chassis (E), on the other side of the machine (S).

6. A butting machine according to one of claims 2 to 5, **characterised in that** each locking member (1, 1') comprises two vices (12, 13) (12', 13') on which are fixed in a removable fashion, respectively both jaws of the corresponding locking member (11, 11'), whereas the said vices (12, 13) (12', 13') are movable with respect to one another perpendicular to the running plane from a position for clamping the jaws and a spaced apart position, **characterised in that** the rails of both lateral guiding assemblies (H, K) are placed at two levels (H2, H3) (K2, K3) corresponding respectively to the levels of the rails (21, 15) of the central assembly (G) provided respectively on both vices of each stand (1, 1'), in the position where the clamping jaws are spaced apart, in order to allow transfer and replacement of the said jaws while travelling, respectively, above and below the running plane of the bands.

7. A butting machine according to one of previous claims, **characterised in that** it comprises a first clamping jaw assembly (2, 3) (2', 3') that, in the working position (S), is connected respectively to two terminals of an electric power source for flash butt welding, and a second clamping jaw assembly (20, 30) (20', 30') suitable to the passage of a laser torch running along a transversal direction parallel to the edges to be welded after the said edges have been engaged.

8. A butting machine according to claim 5, **characterised in that** the jaws of the first clamping jaw assembly (2, 3) (2', 3'), suitable to flash butt welding each comprise a removable fastening section on the lengthened vice (12, 13) (12', 13'), on the side of the edge to be welded, by quite a thick lip to enable application of a forging pressure between the edges to be welded and that the jaws of the second clamping jaw assembly (20, 30) (20', 30'), suitable to laser beam welding each comprise a removable fastening section on the lengthened vice (12, 13) (12', 13'), on the side of the edge to be welded, by a nose (38) extending as close as possible to the edge to be welded in order to maintain the band over its whole width during the shearing process, whereas the said nose (38) is thin enough to allow passage of a laser beam welding equipment (L).

9. A butting method for two metal bands (M1, M2) moving one after the other along a longitudinal running direction (x'x), while passing through a welding machine comprising two locking members (11, 11') mounted respectively on a fixed stand (1) and on a mobile stand (1') movable longitudinally with respect to the fixed stand, whereas each locking member comprises two clamping jaws (2, 3) (2', 3') placed respectively above and below a substantially horizontal running plane of the bands and fixed removably, respectively on two vices (12, 13) (12', 13') movable vertically, with respect to one another, between a position where the jaws are spaced apart and a position where the jaws are close together,
**characterised in that** two successive bands can be welded according to either of at least two different welding modes in relation to the nature and/or the thickness of the bands and at least two clamping jaw assemblies are available, each suitable to one of the welding modes, respectively a first clamping jaw assembly that is mounted in operation in the machine and at least one second assembly that is placed in standby beside the machine, so that, when changing welding modes, the first clamping jaw assembly used previously for welding according to a first mode can be removed from the machine and replaced immediately by the second clamping jaw assembly suitable to the second welding mode.

10. A butting method according to claim 9, **characterised in that** the jaws can be replaced when the vices are spaced apart, by sliding the jaws, respectively above and below the running direction of the band and without engagement with the said band, so that, when changing welding modes between the downstream end of a first band and the upstream end of a second band, the first jaw assembly placed in the machine and suitable to the previous welding mode can be removed from the machine and replaced with a second assembly suitable to the following welding mode, as the first band is running to an end and without stopping the said from running.

11. A butting method according to one of claims 9 and 10, **characterised in that**, to change welding mode, the first clamping jaw assembly (2, 3, 2', 3') suitable to the previous welding mode, is removed from the machine (S) and transferred to a first standby chassis (E) placed on a first side of the machine (S) and the second clamping jaw assembly (20, 30, 20', 30') suitable to the following welding mode is transferred to the machine (S) from a second standby chassis (B) placed previously in stand by on the second side of the machine (S).

## Patentansprüche

1. Maschine zum Stumpfschweißen zweier Metallbänder (M1, M2), die sich hintereinander in längsgerichteter Laufrichtung (x, x') bewegen, mit zwei in Längsrichtung relativ zueinander verschiebbaren Haltegestellen (1, 1'), an denen jeweils zwei Halteelemente (11) für das in Laufrichtung stromabwärtige Ende eines ersten Bandes (M1) und (11') das stromaufwärtige Ende eines zweiten Bandes (M2) angebracht sind, welche jeweils zu beiden Seiten einer Bewegungsebene der Bänder zwei Klemmvorrichtungen (12, 13) (12', 13') aufweisen, an denen jeweils zwei Paare von Klemmbacken (2, 3) (2', 3') zum Klemmen des Endes jedes Bandes (M1, M2) befestigt sind, wobei die Klemmvorrichtungen zwischen einer beabstandeten Position zum Demontieren der Backen und einer Schließposition bewegbar sind, und Einrichtungen zum Schweißen der beiden parallelen Ränder (m1, m2), die jeweils am stromaufwärtigen und stromabwärtigen Ende der beiden Bänder (M1, M2) vorgesehen sind, nach dem Annähern der Ränder durch aufeinander zu gerichtetes Verschieben der Halteelemente (11, 11') in Längsrichtung, wobei die Schweißeinrichtungen jeweils in mindestens zwei verschiedenen Schweißmodi (V, L) arbeiten,
**dadurch gekennzeichnet, daß** sie mit mindestens zwei Klemmbackengruppen (2, 3, 2' 3') (20, 30, 20', 30') versehen ist, die in jeder Gruppe jeweils an jeden Schweißmodus (V, L) angepaßt sind, wobei die Klemmbacken an jeder entsprechenden Klemmvorrichtung (12, 13) (12', 13') gleitend verschiebbar angebracht sind und Transfereinrichtungen (D, F) zugeordnet sind, welche eine erste Gruppe von Klemmbacken (2, 3) (2', 3') von einer auf die Bewegungsachse (x'x) zentrierten Arbeitsposition (S) zu einer zur Seite hin beabstandeten Warteposition verbringen, bzw. eine zweite Gruppe (20, 30) (20', 30') von einer Warteposition in die Arbeitsposition (S) verbringen.

2. Stumpfschweißmaschine nach Anspruch 1, **dadurch gekennzeichnet, daß** sie eine zentrale Führungsanordnung (G) aufweist, die an jedem Gestell (1, 1') zwei Führungsbahnen (G2, G3) aufweist, welche jeweils an den beiden Klemmvorrichtungen (12, 13) jedes Halteelements (11, 11') ausgebildet sind und jeweils eine Gleitschiene (21, 15) zum gleitenden Stützen jeder der Klemmbacken des entsprechenden Halteelements (11, 11') aufweisen, wobei sich die zentrale Führungsbahn (G2, G3) quer zur Laufrichtung zwischen zwei Seitenflächen des Gestells (1, 1') der Maschine (S) erstreckt, und daß diese mindestens einem Wartegestell zugeordnet ist, das auf mindestens einer Seite der Maschine (S) angeordnet ist und mindestens eine seitliche Führungsanordnung (H) aufweist, welche zwei Paar Führungsbahnen (H2, H3, H'2, H'3) für jeweils die beiden Klemmbacken jedes Halteelements (11, 11') aufweist, welche jeweils mindestens eine Gleitschiene (72, 73) aufweisen, die jeweils - zumindest in einer relativen Position des Wartegestells in bezug auf die beiden Gestelle (1, 1'), welche das Verfahren einer ersten Gruppe von Klemmbacken (2, 3, 2', 3') von ihrer Arbeitsposition (S) in Richtung des Wartegestells und, umgekehrt, einer zweiten Gruppe von Klemmbacken (20, 30, 20', 30') vom Wartegestell zur Arbeitsposition (S) durch Gleiten auf den fluchtenden Gleitschienen ermöglicht, - in Verlängerung der entsprechenden Gleitschiene (21, 15) der entsprechenden Klemmvorrichtung (12, 13) angeordnet ist.

3. Stumpfschweißmaschine nach Anspruch 2, **dadurch gekennzeichnet, daß** sie zwei seitliche Führungsanordnungen aufweist, nämlich eine erste seitliche Anordnung (K), die zu Anfang leer ist, um eine erste Gruppe von Klemmbacken (2, 3, 2', 3') aufzunehmen, die von der Arbeitsposition (S) durch Gleiten auf den fluchtenden Gleitschienen (21, 15) der zentralen Führungsanordnung (G) und denjenigen (52, 53) der ersten seitlichen Anordnung (K) kommt, und eine zweite seitliche Führungsanordnung (H), um eine zweite Gruppe von Klemmbacken (20, 30) (20', 30') in Wartestellung zu stützen und diese in die Arbeitsposition (S) zu verfahren, nachdem die erste Gruppe von Klemmbacken (2, 3) (2', 3') zurückgezogen wurde und die Gleitschienen (72, 73) der zweiten seitlichen Anordnung (H) mit denjenigen (21, 15) der zentralen Führungsanordnung (G) ausgerichtet sind.

4. Stumpfschweißmaschine nach Anspruch 3, **dadurch gekennzeichnet, daß** die beiden seitlichen Führungsanordnungen (K, H) jeweils auf zwei Wartegestellen (E, B) angeordnet sind, welche zu beiden Seiten der Maschine (S) plaziert sind, wobei die zentrale Führungsanordnung (G) und die beiden seitlichen Anordnungen (K, H) in einer relativen Position der beiden Haltegestelle (1, 1'), in welcher jede Gleitschiene (21, 15) der zentralen Anordnung (G) an jedem Ende mit einer entsprechenden Gleitschiene (52, 53) (72, 73) einer seitlichen Anordnung (K, H) ausgerichtet ist, auf die gleiche Quermittelebene (Q) zentriert sind.

5. Stumpfschweißmaschine nach Anspruch 4, **dadurch gekennzeichnet, daß** eine erste Gruppe von Klemmbacken (2, 3) (2', 3') in der Arbeitsposition an der zentralen Führungsanordnung (G) angebracht ist, und daß eine zweite Gruppe von Klemmbacken (20, 30) (20', 30') in der Warteposition auf den Gleitschienen (72, 73) einer an einem zweiten Wartegestell (B) angebrachten seitlichen Führungsanordnung (H) angebracht ist, und daß die Maschine (S) Einrichtungen (D, F) aufweist, welche gleichzeitig die zweite Gruppe von Klemmbacken (20, 30) (20', 30') aus deren Warteposition (B) in die Arbeitsposition (S) auf der zentralen Führungsanordnung (G) bei Rückzug der ersten Gruppe von Klemmbacken (2, 3) (2', 3') und diese aus ihrer Arbeitsposition (S) in eine Warteposition auf einer seitlichen Führungsanordnung (K) verfahren, die auf der anderen Seite der Maschine auf einem ersten Wartegestell (E) ausgebildet ist.

6. Stumpfschweißmaschine nach einem der Ansprüche 2 bis 5, bei der jedes Haltegestell (1, 1') zwei Klemmvorrichtungen (12, 13) (12', 13') aufweist, an denen jeweils die beiden Klemmbacken des entsprechenden Halteelements (11, 11') bewegbar angebracht sind, wobei die Klemmvorrichtungen (12, 13) (12', 13') in bezug zueinander senkrecht zur Bewegungsebene zwischen einer Klemmposition der Klemmbacken und einer beabstandeten Position verschiebbar sind, **dadurch gekennzeichnet, daß** die Gleitschienen der beiden seitlichen Führungsanordnungen (H, K) in zwei Höhen (H2, H3) (K2, K3), die in der beabstandeten Position der Klemmbacken jeweils den Höhen der Gleitschienen (21, 15) der zentralen Führungsanordnung (G) entsprechen, welche jeweils an den beiden Klemmvorrichtungen jedes Gestells (1, 1') entsprechen, derart angeordnet sind, daß es möglich ist, die letzteren durch Bewegen über bzw. unter der Bewegungsebene der Bänder zu verfahren und auszuwechseln.

7. Stumpfschweißmaschine nach einem der vorhergehenden Ansprüche, **dadurch gekennzeichnet, daß** sie eine erste Gruppe von Klemmbacken (2, 3) (2', 3'), die in der Arbeitsposition (S) jeweils mit zwei Anschlüssen einer elektrischen Stromquelle verbunden sind, um das Abtrennschweißen durchführen zu können, und eine zweite Gruppe von Klemmbacken (20, 30) (20', 30') aufweist, die in der Lage sind, einen Laserbrenner in Querrichtung parallel zu den zu schweißenden Rändern zu führen, nachdem diese in Kontakt miteinander gebracht wurden.

8. Stumpfschweißmaschine nach Anspruch 5, **dadurch gekennzeichnet, daß** die Klemmbacken der ersten Gruppe von Klemmbacken (2, 3) (2', 3'), die für das Abtrennschweißen ausgebildet sind, jeweils ein bewegbares Teil zur Befestigung an der Klemmvorrichtung (12, 13) (12', 13') aufweisen, welches auf der Seite des zu schweißenden Randes durch eine Lippe verlängert ist, welche ausreichend dick ist, um das Aufbringen eines Schmiededrucks zwischen den zu schweißenden Rändern zu ermöglichen, und daß die Klemmbacken der zweiten Gruppe (20, 30) (20', 30'), die für das Laserschweißen ausgebildet sind, jeweils ein bewegbares Teil zur Befestigung an der Klemmvorrichtung (12, 13) (12', 13') aufweisen, welches auf der Seite des zu schweißenden Randes durch einen Schnabel (38) verlängert ist, welcher sich so nahe wie möglich an den zu schweißenden Rand erstreckt, um das Band während des Trennens über dessen gesamte Breite zu halten, wobei der Schnabel (38) ausreichend dünn ist, um den Durchgang einer LaserstrahlSchweißvorrichtung (L) zu ermöglichen.

9. Verfahren zum Stumpfschweißen zweier Metallbänder (M1, M2), die sich hintereinander in längsgerichteter Laufrichtung (x'x) bewegen, wobei sie in eine Schweißmaschine laufen, welche zwei Halteelemente (11, 11') aufweist, die an einem festen Gestell (1) bzw. einem bewegbaren Gestell (1') angebracht sind, welches in bezug auf das feste Gestell in Längsrichtung verschiebbar ist, wobei jedes Halteelement zwei Klemmbacken (2, 3) (2', 3') aufweist, die über bzw. unter einer im wesentlichen horizontalen Bewegungsebene der Bänder angeordnet und jeweils bewegbar an zwei Klemmvorrichtungen (12, 13) (12', 13') angebracht sind, die in bezug zueinander zwischen einer beabstandeten Position und einer Klemmposition der Klemmbacken vertikal bewegbar sind,
**dadurch gekennzeichnet, daß** das Schweißen der beiden aufeinanderfolgenden Bänder nach dem einen oder dem anderen von mindestens zwei unterschiedlichen Schweißmodi in Abhängigkeit von der Art und/oder der Dicke der Bänder durchgeführt wird, und daß zumindest zwei Gruppen von jeweils für einen der Schweißmodi ausgelegten Klemmbacken, nämlich eine erste Gruppe von Klemmbacken, die betriebsbereit in der Maschine befestigt ist, und eine zweite Gruppe von Klemmbacken, die neben der Maschine in Reserve vorgesehen ist, derart angeordnet werden, daß bei einem Wechsel des Schweißmodus die erste Gruppe von Klemmbacken, die zuvor für das Schweißen nach einem ersten Schweißmodus verwendet wurde, von der Maschine entfernt und unmittelbar durch die zweite Gruppe von Klemmbacken ersetzt werden kann, die für den zweiten Schweißmodus ausgelegt ist.

10. Stumpfschweißverfahren nach Anspruch 9, **dadurch gekennzeichnet, daß** das Austauschen der Klemmbacken in der beabstandeten Position der Klemmvorrichtungen durch gleitendes Verschieben der Klemmbakken über bzw. unter der Bewegungsebene des Bandes und ohne Kontakt mit diesem derart erfolgt, daß bei einem Wechsel des Schweißmodus zwischen dem stromabwärtigen Ende eines ersten Bandes und dem stromaufwärtigen Ende eines zweiten Bandes das Zurückziehen der ersten Gruppe von Klemmbacken, die für den vorhergehenden Schweißmodus ausgelegt ist, und das Plazieren der zweiten Gruppe von Klemmbacken, die für den folgenden Schweißmodus ausgelegt sind, während des Endes des Abwickelns des ersten Bandes und ohne Anhalten der Bewegung desselben erfolgt.

11. Stumpfschweißen nach einem der Ansprüche 9 und 10, **dadurch gekennzeichnet, daß** zum Wechseln des Schweißmodus die erste Gruppe von Klemmbacken (2, 3, 2', 3'), die für den vorhergehenden Schweißmodus ausgelegt ist, von der Maschine (S) zurückgezogen und auf ein erstes Wartegestell (E) verfahren wird, das auf einer ersten Seite der Maschine (S) angeordnet ist, und daß die zweite Gruppe von Klemmbacken (20, 30, 20', 30'), die für den folgenden Schweißmodus ausgelegt ist, von einem zweiten Wartegestell (B), das zuvor in Reserve auf der zweiten Seite der Maschine (S) angeordnet war, in die Maschine (S) verfahren wird.
